# EUROPEAN PATENT SPECIFICATION

(11) **EP 0 778 927 B1**
(45) Date of publication and mention of the grant of the patent: **12.06.2002**
(21) Application number: 95930775.2
(22) Date of filing: 31.08.1995
(51) Int. Cl.: F16K 1/22, F16K 27/02

(54) **BUTTERFLY VALVE ASSEMBLY**
KLAPPENVENTILANORDNUNG
ENSEMBLE ROBINET A PAPILLON

(30) Priority: 31.08.1994 SE 9402882
(43) Date of publication of application: 18.06.1997
(73) Proprietor: Volvo Car Corporation, 405 31 Göteborg (SE)
(72) Inventor: KARLSSON, Jan, S-421 58 Västra Frölunda (SE); NILSSON, Lars-Ake, S-426 58 Västra Frölunda (SE)
(74) Representative: Hammond, Andrew David
(86) International application number: SE9500980
(87) International publication number: WO9607041

(56) References cited:
- FR-A- 2 221 656
- SE-B- 360 724
- US-A- 3 343 805
- US-A- 4 111 395
- US-A- 4 712 768

## Description

### TECHNICAL FIELD

The present invention relates to a butterfly valve assembly according to the preambles of claim 1, 7 and 8 respectively.

### BACKGROUND OF THE INVENTION:

Butterfly valves are commonly used to control the flow volume of a fluid through a pipe system. A typical field of application is the automobile industry in which butterfly valves are used to regulate air flow into an internal combustion engine.

A butterfly valve assembly and a method for its production are disclosed in EP-A-0 482 272 in which the valve housing is injection-moulded in a first step in a mould using a pair of mould halves. Thereafter, and in the same mould with the same mould halves, the butterfly vane and its spindle are injection-moulded, with the valve housing acting as a mould surface for the circumference of the butterfly vane. In this manner, a substantially perfect sealing contact is obtained between the housing and the vane.

It is a general goal within the automobile industry to improve the efficiency, performance and exhaust emissions of vehicles, as well as to provide vehicles which are easy to drive. In this respect, the control of the air flow across the butterfly valve in the air intake system has been the subject of a great deal of research.

Typically, a butterfly valve consists of a generally cylindrical housing within which a generally circular butterfly vane is pivotally arranged. At small valve openings, the rate of change of flow across the valve is considerably greater per degree of valve opening than at large valve openings. This implies that it is very difficult to regulate the volume of air passing across the butterfly valve in the air intake system of a combustion engine at small valve openings. Several solutions to this problem have been proposed, including providing the butterfly vane with "rucksacks".

Another known solution is described in US-A-4 712 768 in which the vane within a butterfly valve is formed to include two diametrically opposed, generally semi-circular projections, one extending in the upstream direction and the other extending in the downstream direction of fluid flow. The two projections are asymmetrical with respect to one another and are each provided with a plurality of fluid flow passages. The fluid flow passages are each arranged to extend from the outer periphery of the vane to the inner diameter of the complementary projection. In this manner, the initial flow through the valve during a first predetermined number of degrees of rotation of the vane will be solely through the passages. Whilst this arrangement is said to facilitate maximum fluid flow control during low angle operation, the vane itself is relatively complicated to manufacture.

A further known solution, as shown in US-A-5 374 031 is to provide the inlet passage and the outlet passage of a butterfly valve with a shaped flow control surface immediately adjacent the seat ring for the butterfly vane. In this manner, as the butterfly vane is rotated from a closed position to an open position, the shaped flow control surfaces ensure that the volume of air passing across the valve is restricted over the first, say, 10 to 15° of valve opening. Since, however, the valve housing is normally cast in aluminium or moulded in plastic, it is necessary to machine such flow control surfaces once the valve housing has been moulded.

### SUMMARY OF THE INVENTION:

It is therefore an object of the present invention to provide a butterfly valve assembly in which the flow volume across the valve at small valve openings is suitably controlled and which valve assembly lends itself more readily to mass production techniques.

This object is achieved in accordance with the present invention by a butterfly valve assembly according to any one of claims 1, 7 and 8.

Since, in accordance with the invention, the passage in which the shaped flow control surface is arranged is manufactured separately from the remainder of the valve housing, the passage can be injection-moulded or die-cast so as to directly obtain the flow control surface without the need for subsequent machining operations.

Preferred embodiments of the present invention are detailed in the respective dependent claims.

### BRIEF DESCRIPTION OF THE DRAWINGS:

The invention will be described in greater detail in the following by way of example only and with reference to the attached drawings, in which
- Fig. 1: is a comparative graphical representation of the flow volume against angular opening of a typical prior art butterfly valve assembly and that of a butterfly valve assembly according to the present invention;
- Fig. 2: is a sectional view of the components making up a butterfly valve assembly according to one embodiment of the invention;
- Fig. 3: is a sectional view of the components making up a butterfly valve assembly according to a second embodiment of the invention;
- Fig. 4: is a sectional view of the components making up a butterfly valve assembly according to a third embodiment of the invention, and
- Fig. 5: is an exploded perspective view of the components making up the butterfly valve assembly shown in Fig. 2.

### DETAILED DESCRIPTION OF PREFERRED EMBODIMENTS:

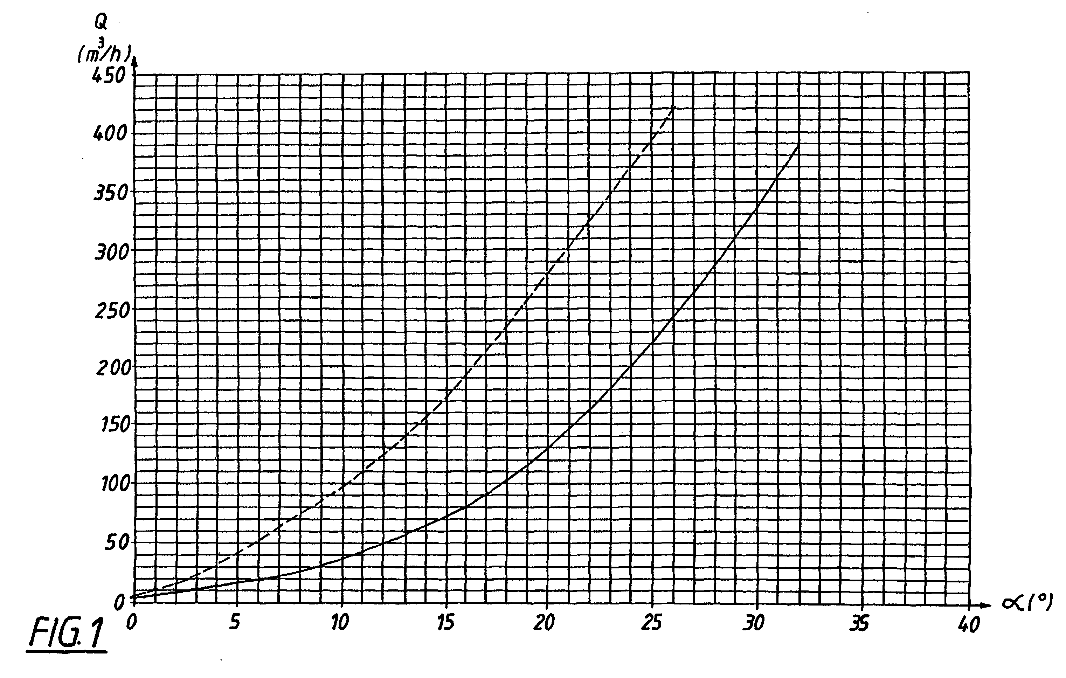

In the graph shown in Fig. 1, the y-axis denotes the volume flow rate Q across the vane of a butterfly valve assembly and the x-axis denotes the angular opening α of the vane. A dashed line is shown in the graph which represents the relationship between the flow rate and the angular opening of the vane for a typical prior art butterfly valve assembly having inlet and outlet passages in the form of substantially cylindrical, straight passages and a planar vane.

The solid curve of Fig. 1 represents the flow characteristics of a valve assembly according to the present invention, from which it can be seen that as the vane is displaced from a closed position to an open position, the volume flow rate increases gradually. As used hereinafter, the expression "increases gradually" is defined by the average rate of change of volume flow rate during the first 5° of vane opening for the valve assembly according to the present invention being at least 10%, preferably at least 20%, and most preferably at least 30% less than that for a conventional butterfly valve assembly having inlet and outlet passages in the form of substantially cylindrical, straight passages and a planar vane, the internal diameters or cross-sectional areas of the passages of both valve assemblies being the same. How this is achieved will be described in greater detail in the following.

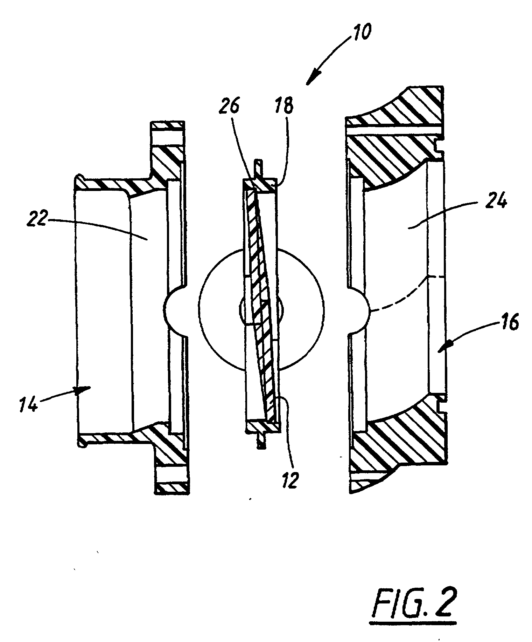

In Figs. 2 to 5, reference numeral 10 generally denotes a butterfly valve assembly according to the present invention. The valve assembly comprises a valve housing and a butterfly vane 12 pivotally arranged within the valve housing. Although shown in the drawings as being substantially planar and circular, the vane 12 may be any element having a shape which corresponds substantially to the cross-sectional shape of the flow passages in the valve housing and having a thickness (i.e. a dimension in the flow direction when the vane is in a closed position) which is less than the cross-sectional extension of the flow passages. The housing itself comprises an inlet passage 14, an outlet passage 16 and a seat ring 18 therebetween, with the ring seat 18 supporting the butterfly vane 12 for rotation about an axis perpendicular to the plane of cross section. Rotation of the butterfly vane 12 can be effected in any conventional manner, for example by means of a pulley around a portion of which a throttle cable passes.

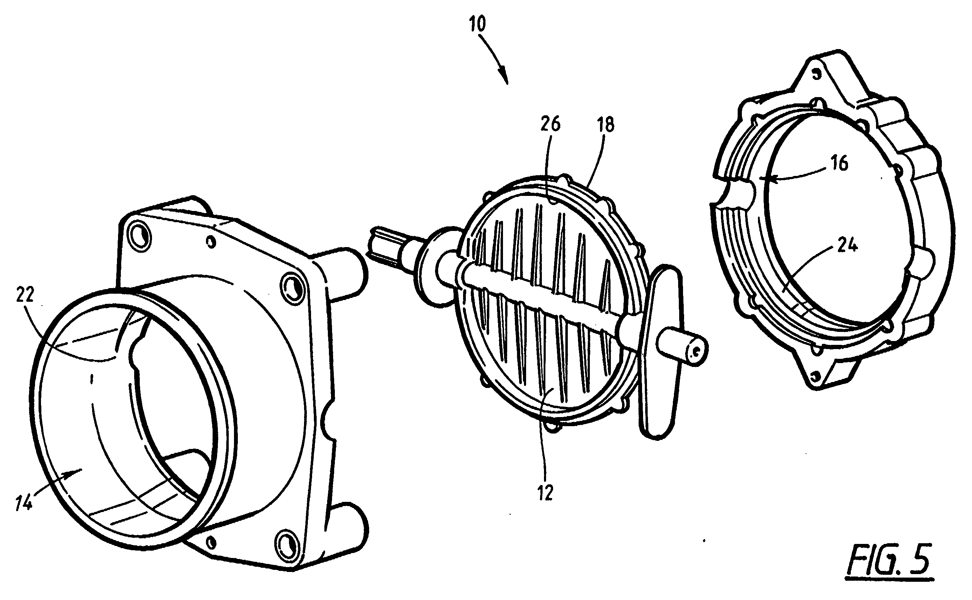

In the embodiment shown in Figs. 2 and 5, both the inlet passage 14 and the outlet passage 16 are each provided with a shaped flow control surface 22, 24 respectively, these surfaces being immediately adjacent the seat ring 18 when the valve housing is assembled. In this respect, the expression "immediately adjacent the seat ring" is defined as a portion of the valve housing over which the circumference of the butterfly vane 12 passes when the vane has been opened 8° from a totally closed position. In other words, when the vane has been opened 8°, its periphery will have passed over at least a portion of one of said shaped flow control surfaces 22, 24. Thus, the periphery of the vane 12 and the shaped flow control surface or surfaces delimit a gap which increases gradually as the vane is displaced from a closed position to an open position, thereby permitting the volume flow rate to increase gradually. In all operating positions of the vane 12, i.e. in all positions except when the vane is fully closed, at least a majority of the volume of flow takes place across the periphery of the vane.

In accordance with one embodiment of the invention, the inlet passage 14, the outlet passage 16 and the seat ring 18 are individual components which are assembled to form the valve housing.

The inlet passage 14 and the outlet passage 16 may either be injection-moulded in a plastics material such as PBTP, polyamide, polyester, modified PPO, PPS, PESU or PETP, or be die-cast in a metal such as aluminium, zinc or magnesium.

Preferably, the seat ring 18 and the butterfly vane are sequentially injection-moulded in a plastics material in accordance with the method described in EP-A-0 482 272, the contents of which are hereby incorporated by reference. It will, however, be apparent to the skilled person that the butterfly vane and seat ring may be fabricated and assembled in a conventional manner.

In a preferred embodiment of the invention and as illustrated in Fig. 2, the seat ring 18 is provided with a circumferentially extending shoulder 26 against which the butterfly vane 12 abuts when the butterfly vane is in a fully closed position. Such a closed position may be desired, for example, when a vehicle is in motion and the accelerator pedal is fully released. In the cases in which the seat ring 18 is moulded or cast, the shoulder 26 is formed during the moulding/casting operation. Otherwise, the seat ring may be machined in order to obtain the shoulder 26.

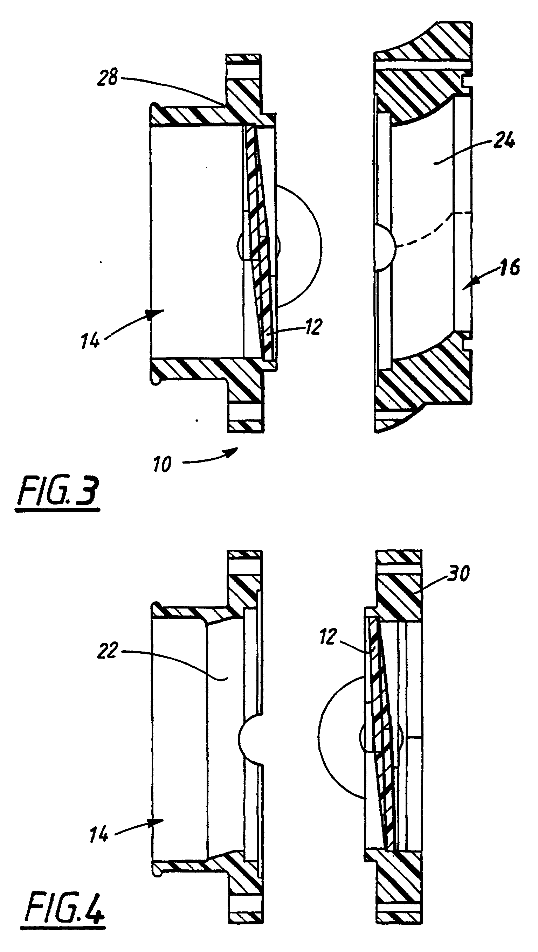

In accordance with another embodiment of the invention and as illustrated in Figs. 3 and 4, in order to produce a cheaper valve assembly, the seat ring and either the inlet passage or the outlet passage may be integrally formed, for example by injection-moulding according to the technique disclosed in EP-A-0 482 272. Clearly, the passage which is formed integrally with the seat ring cannot be moulded with a shaped flow control surface. Such a valve assembly comprises just two distinct components, i.e. the passage having the shaped flow control surface and the combined seat ring and "straight" through passage. Thus, in Fig. 3, the inlet passage and the ring seat are integrally formed to create one half 28 of the valve housing, whilst the outlet passage 16 with shaped flow control surface 24 forms the other half of the valve housing. In a similar manner, in Fig. 5, the outlet passage and the seat ring are integrally formed to create one half 30 of the valve housing, whilst the inlet passage 14 with shaped flow control surface 22 forms the other half of the valve housing.

Naturally, the invention is not restricted to the embodiments described above and shown in the drawings, but may be modified in many ways within the scope of the appended claims. For example, whilst the butterfly vale assembly according to the invention has been described for use in the control of air flow in the air intake system of an internal combustion engine, it is to be understood that the valve assembly may be used in any gas flow applications. Similarly, whilst the inlet passage and the outlet passage have been illustrated in the drawings as relatively short passages, it is to be understood that the inlet passage 14 may extend the entire way to e.g. an air filter housing. Indeed, the passage may be an integral part of the air filter housing. It is also conceivable that the outlet passage 16 be an integral part of the inlet pipe to the cylinder(s) of an internal combustion engine.

## Claims

1. A butterfly valve assembly (10) for regulating gas flow, comprising a valve housing and a vane (12) pivotally arranged within said valve housing, said valve housing comprising an inlet passage (14), an outlet passage (16) and a seat ring (18) including said vane (12) therebetween, and that said inlet passage (14), said outlet passage (16) and said seat ring (18) are individual components which are assembled to form said valve housing, **characterized in that** one or both of said inlet passage and outlet passage being provided with a shaped flow control surface (22, 24 resp.) immediately adjacent said seat ring (18) such that each said shaped control surface and the periphery of said vane delimit a gap which increases gradually as said vane is displaced from a dosed position towards an open position, and **in that** each flow control surface reduces the average rate of change of flow through the valve at small valve opening angles, when compared to a conventional butterfly valve.

2. The butterfly valve assembly as claimed in claim 1, **characterized in that** the reduction of the average rate of change of flow through the valve is 10-30%, as compared to a valve having straight, cylindrical inlet and outlet passages.

3. The butterfly valve assembly as claimed in claim 1, **characterized in that** said flow control surfaces are effective at valve opening angles up to 5°.

4. The butterfly valve assembly as claimed in claim 1, **characterized in that** said inlet passage (14) and/or said outlet passage (16) are die-cast in a metal such as aluminium, zinc or magnesium.

5. The butterfly valve assembly as claimed in claim 1, **characterized in that** said inlet passage (14) and/or said outlet passage (16) are injection-moulded in a plastics material such as PBTP.

6. The butterfly valve assembly as claimed in claim 1, **characterized in that** said seat ring (18) is injection-moulded in a plastics material.

7. The butterfly valve assembly as claimed in claim 5, **characterized in that** said seat ring (18) and said butterfly vane (12) are sequentially moulded in one and the same mould.

8. The butterfly valve assembly as claimed in claim 6 or 7, **characterized in that** said seat ring (18) is provided with a circumferentially extending shoulder (26) against which the butterfly vane (12) abuts when the butterfly vane is in a closed position.

9. A butterfly valve assembly (10) for regulating gas flow, comprising a valve housing and a vane (12) pivotally arranged within said valve housing, said housing comprising an inlet passage (14), an outlet passage (16) and a seat ring (18) therebetween, **characterized in that** said inlet passage (14) being provided with a shaped flow control surface (22) immediately adjacent said seat ring (18) such that said shaped control surface and the periphery of said vane delimit a gap which increases gradually as said vane is displaced from a closed position towards an open position, and that said outlet passage (16) and said seat ring (18) are formed as a unit, for example by injection-moulding, to create one half (30) of the valve housing, which is assembled with said inlet passage (16) to form said valve housing, and **in that** the flow control surface reduces the average rate of change of flow through the valve at small valve openings angles, when compared to a conventional butterfly valve.

10. A butterfly valve assembly (10) for regulating gas flow, comprising a valve housing and a butterfly vane (12) pivotally arranged within said valve housing, said housing comprising an inlet passage (14), an outlet passage (16) and a seat ring (18) therebetween, **characterized in** said outlet passage (16) being provided with a shaped flow control surface (24) immediately adjacent said seat ring (18) such that said shaped control surface (24) and the periphery of said vane delimit a gap which increases gradually as said vane is displaced from a closed position towards an open position, and that said inlet passage (14) and said seat ring (18) are integrally formed, for example by injection-moulding, to create one half (28) of the valve housing, which is assembled with said outlet passage (16) to form said valve housing, and **in that** the flow control surface reduces the average rate of change of flow through the valve at small valve openings angles, when compared to a conventional butterfly valve.

## Patentansprüche

1. Klappenventilanordnung (10) zur Regulierung eines Gasflusses, mit einem Ventilgehäuse und einer Ventilklappe (12), die drehbar innerhalb des Ventilgehäuses angeordnet ist, wobei das Ventilgehäuse eine Einlassöffnung (14), eine Auslassöffnung (16) und einen Ventilsitzring (18) aufweist, die dazwischen diese Ventilklappe (12) umfassen und wobei die Einlassöffnung (14) die Auslassöffnung (16) und dieser Ventilsitzring (18) einzelne Bestandteile darstellen, die in montiertem Zustand das Ventilgehäuse bilden,
**dadurch gekennzeichnet,**
**dass** die Einlassöffnung, die Auslassöffnung oder beide dieser Öffnungen eine angeformte Durchflusssteuerungsoberfläche (22 bzw. 24) aufweisen, die unmittelbar an den Ventilsitzring angrenzen derart, dass jede der angeformten Durchflusssteuerungsoberflächen und der Außenumfang der Ventilklappe eine Öffnung begrenzen, die fortschreitend größer wird, wenn die Ventilklappe von einer geschlossenen in eine geöffnete Lage bewegt wird, und dass jede der Durchflusssteuerungsoberflächen die durchschnittliche Änderung der Durchflussmenge durch das Ventil im Vergleich zu einem üblichen Klappenventil bei kleinen Öffnungswinkeln des Ventils verringert.

2. Klappenventilanordnung nach Anspruch 1,
**dadurch gekennzeichnet,**
**dass** die Verringerung der durchschnittlichen Änderung der Durchflussmenge durch das Ventil 10 % - 30 % im Vergleich zu einem Ventil beträgt, das gerade und zylindrische Ein- und Auslassöffnungen aufweist.

3. Klappenventilanordnung nach Anspruch 1,
**dadurch gekennzeichnet,**
**dass** die Durchflusssteuerungsoberfläche bei einem Öffnungswinkel des Ventils bis zu 5° wirksam ist.

4. Klappenventilanordnung nach Anspruch 1,
**dadurch gekennzeichnet,**
**dass** die Einlassöffnung (14) und/oder die Auslassöffnung (16) durch Druckguss hergestellt sind und aus Aluminium, Zink oder Magnesium bestehen.

5. Klappenventilanordnung nach Anspruch 1,
**dadurch gekennzeichnet,**
**dass** die Einlassöffnung (14) und/oder die Auslassöffnung (16) durch Spritzguss hergestellt und aus plastischem Material, wie z.B. PBTP bestehen.

6. Klappenventilanordnung nach Anspruch 1,
**dadurch gekennzeichnet,**
**dass** der Ventilsitzring (18) durch Spritzguss hergestellt ist und aus plastischem Material besteht.

7. Klappenventilanordnung nach Anspruch 5,
**dadurch gekennzeichnet,**
**dass** der Ventilsitzring (18) und das Klappenventil (12) in aufeinander folgenden Schritten und in der gleichen Spritzform geformt sind.

8. Klappenventilanordnung nach den Ansprüchen 6 oder 7,
**dadurch gekennzeichnet,**
**dass** der Ventilsitzring (18) mit einer sich an dessen Umfang erstreckenden Schulter (26) versehen ist, an der das Klappenventil in der geschlossenen Stellung anliegt.

9. Klappenventilanordnung (10) zur Regulierung eines Gasflusses, mit einem Ventilgehäuse und einer Ventilklappe (12), die drehbar innerhalb des Ventilgehäuses angeordnet ist, wobei das Ventilgehäuse eine Einlassöffnung (14), eine Auslassöffnung (16) und dazwischen einen Ventilsitzring (18) aufweist,
**dadurch gekennzeichnet,**
**dass** die Einlassöffnung (14) mit einer angeformten Durchflusssteuerungsoberfläche (22) unmittelbar angrenzend an den Ventilsitzring (18) versehen ist derart, dass diese angeformte Durchflusssteuerungsoberfläche und der Außenumfang der Ventilklappe eine Öffnung begrenzen, die fortschreitend größer wird, wenn die Ventilklappe von einer geschlossenen in eine geöffnete Lage bewegt wird, und dass diese Auslassöffnung (16) und der Ventilsitzring (18) als Einheit ausgebildet sind, zum Beispiel durch Spritzgießen, zur Bildung der einen Hälfte (30) des Ventilgehäuses, das mit der Einlassöffnung (16) zur Bildung des Ventilgehäuses zusammen montiert ist, und dass die Durchflusssteuerungsoberfläche die durchschnittliche Änderung der Durchflussmenge durch das Ventil in Vergleich zu üblichen Klappenventilen bei kleiner Ventilöffnung verringert.

10. Klappenventilanordnung (10) zur Regulierung eines Gasflusses, mit einem Ventilgehäuse und einer Ventilklappe (12), die drehbar innerhalb des Ventilgehäuses angeordnet ist, wobei das Ventilgehäuse eine Einlassöffnung (14), eine Auslassöffnung (16) und dazwischen einen Ventilsitzring (18) aufweist,
**dadurch gekennzeichnet,**
**dass** die Auslassöffnung (16) mit einer angeformten Durchflusssteuerungsoberfläche (24) unmittelbar angrenzend an den Ventilsitzring (18) versehen ist derart, dass diese angeformte Durchflusssteuerungsoberfläche (24) und der Außenumfang der Ventilklappe eine Öffnung begrenzen, die fortschreitend größer wird, wenn die Ventilklappe von einer geschlossenen in eine geöffnete Lage bewegt wird, und dass die Einlassöffnung (14) und der Ventilsitzring zusammen geformt sind, zum Beispiel durch Spritzgießen, wobei eine Hälfte des Ventilgehäuses gebildet ist, die mit der Auslassöffnung (16) zum ganzen Ventilgehäuse zusammen montiert ist, und dass die Durchflussteuerungsoberfläche die durchschnittliche Änderung der Durchflussmenge durch das Ventil im Vergleich zu üblichen Klappenventilen bei kleiner Ventilöffnung verringert.

## Revendications

1. Ensemble de soupape papillon (10) destiné à réguler un écoulement de gaz, comportant un boîtier de soupape et un papillon (12) disposé de façon pivotante à l'intérieur dudit boîtier de soupape, ledit boîtier de soupape comportant un passage d'entrée (14), un passage de sortie (16) et une bague de siège (18) comprenant ledit papillon (12) entre eux, et ledit passage d'entrée (14), ledit passage de sortie (16) et ladite bague de siège (18) sont des composants individuels qui sont assemblés afin de former ledit boîtier de soupape, **caractérisé en ce que** ledit passage d'entrée ou ledit passage de sortie ou bien les deux sont pourvus d'une surface de commande d'écoulement profilée (22, 24 respectivement) immédiatement adjacente à ladite bague de siège (18) de telle sorte que chaque dite surface de commande profilée et la périphérie dudit papillon délimitent un espace qui augmente progressivement lorsque ledit papillon est déplacé depuis une position fermée vers une position ouverte, et **en ce que** chaque surface de commande d'écoulement réduit la vitesse moyenne de variation d'écoulement à travers la soupape pour des petits angles d'ouverture de soupape, comparée à une soupape papillon conventionnelle.

2. Ensemble de soupape papillon selon la revendication 1, **caractérisé en ce que** la réduction de la vitesse moyenne de variation d'écoulement à travers la soupape est de 10 à 30%, comparée à une soupape ayant des passages d'entrée et de sortie cylindriques droits.

3. Ensemble de soupape papillon selon la revendication 1, **caractérisé en ce que** lesdites surfaces de commande d'écoulement sont efficaces à des angles d'ouverture de soupape jusqu'à 5%.

4. Ensemble de soupape papillon selon la revendication 1, **caractérisé en ce que** ledit passage d'entrée (14) et/ou ledit passage de sortie (16) sont coulés en métal tel que de l'aluminium, du zinc ou du magnésium.

5. Ensemble de soupape papillon selon la revendication 1, **caractérisé en ce que** ledit passage d'entrée (14) et/ou ledit passage de sortie (16) sont moulés par injection dans une matière plastique telle que PBTP.

6. Ensemble de soupape papillon selon la revendication 1, **caractérisé en ce que** ladite bague de siège (18) est moulée par injection dans une matière plastique.

7. Ensemble de soupape papillon selon la revendication 5, **caractérisé en ce que** ladite bague de siège (18) et ledit papillon (12) sont moulés de manière séquentielle dans un seul et même moule.

8. Ensemble de soupape papillon selon la revendication 6 ou 7, **caractérisé en ce que** ladite bague de siège (18) est pourvue d'un épaulement s'étendant de manière circonférentielle (26) contre lequel le papillon (12) bute lorsque le papillon est dans une position fermée.

9. Ensemble de soupape papillon (10) destiné à réguler un écoulement de gaz, comportant un boîtier de soupape et un papillon (12) disposé de façon pivotante à l'intérieur dudit boîtier de soupape, ledit boîtier comportant un passage d'entrée (14), un passage de sortie (16) et une bague de siège (18) entre eux, **caractérisé en ce que** ledit passage d'entrée est pourvu d'une surface de commande d'écoulement profilée (22) immédiatement adjacente à ladite bague de siège (18) de telle sorte que ladite surface de commande profilée et la périphérie dudit papillon délimitent un espace qui augmente progressivement lorsque ledit papillon est déplacé depuis une position fermée vers une position ouverte, et **en ce que** ledit passage de sortie (16) et ladite bague de siège (18) sont formés comme une unité, par exemple par moulage par injection, afin de créer une moitié (30) du boîtier de soupape, qui est assemblée avec ledit passage d'entrée (16) afin de former ledit boîtier de soupape, et **en ce que** la surface de commande d'écoulement réduit la vitesse moyenne de variation d'écoulement à travers la soupape pour des petits angles d'ouverture de soupape, comparée à une soupape papillon conventionnelle.

10. Ensemble de soupape papillon (10) destiné à réguler un écoulement de gaz, comportant un boîtier de soupape et un papillon (12) disposé de façon pivotante à l'intérieur dudit boîtier de soupape, ledit boîtier de soupape comportant un passage d'entrée (14), un passage de sortie (16) et une bague de siège (18) entre eux, **caractérisé en ce que** ledit passage de sortie est pourvu d'une surface de commande d'écoulement profilée (24) immédiatement adjacente à ladite bague de siège (18) de telle sorte que ladite surface de commande profilée (24) et la périphérie dudit papillon délimitent un espace qui augmente progressivement lorsque ledit papillon est déplacé depuis une position fermée vers une position ouverte, et **en ce que** ledit passage d'entrée (14) et ladite bague de siège (18) sont formés intégralement, par exemple par moulage par injection, afin de créer une moitié (28) du boîtier de soupape, qui est assemblée avec ledit passage de sortie (16) afin de former ledit boîtier de soupape, et **en ce que** la surface de commande d'écoulement réduit la vitesse moyenne de variation d'écoulement à travers la soupape pour des petits angles d'ouverture de soupape, comparée à une soupape papillon conventionnelle.
